# EUROPÄISCHE PATENTSCHRIFT

(11) **EP 4 343 164 B1**
(45) Veröffentlichungstag und Bekanntmachung des Hinweises auf die Patenterteilung: **11.02.2026**
(21) Anmeldenummer: 23193839.0
(22) Anmeldetag: 29.08.2023
(51) Int. Cl.: F16C 33/66, F04D 1/06, F16C 37/00, F16C 19/36

(54) **LAGERANORDNUNG ZUM FÜHREN EINER MOTORWELLE EINER VERTIKALEN TURBINENPUMPE**
BEARING ARRANGEMENT FOR GUIDING A MOTOR SHAFT OF A VERTICAL TURBINE PUMP
DISPOSITIF DE PALIER POUR GUIDER L'ARBRE MOTEUR D'UNE POMPE À TURBINE VERTICALE

(30) Priorität: 20.09.2022 BE 202205744
(43) Veröffentlichungstag der Anmeldung: 27.03.2024
(73) Patentinhaber: WILO SE, 44263 Dortmund (DE)
(72) Erfinder: Albers, Daniel, 44263 Dortmund (DE); Kirpo, Maksim, 44263 Dortmund (DE); Pawar, Shashank, 44263 Dortmund (DE)
(74) Vertreter: Michalski Hüttermann & Partner Patentanwälte mbB

(56) Entgegenhaltungen:
- EP-A2- 0 233 593
- WO-A1-2007/040427
- DE-A1- 3 214 030
- JP-U- S5 578 896
- US-A1- 2014 093 201

## Beschreibung

### Technisches Gebiet

Die Erfindung betrifft eine Lageranordnung zum Führen einer Motorwelle zum Abstützen von Axial- und/oder Radialkräften einer vertikalen Turbinenpumpe mit einem Lager aufweisend einen drehfest mit der Motorwelle verbindbaren Innenring und einen Außenring und einer mit einem Öl gefüllten Ölwanne, in welcher das Lager wenigstens zum Teil in das Öl eingetaucht angeordnet ist. Die Erfindung betrifft ferner die vertikale Turbinenpumpe mit einem sich entlang einer Achse erstreckenden Steigrohr, einer in dem Steigrohr angeordneten Motorwelle, einem an einem oberen Steigrohrende angeordneten und die Motorwelle antreibenden Motor, einem an einem entgegengesetzten, unteren Steigrohrende angeordneten und von der Motorwelle angetriebenen Laufrad zum Fördern eines Fluids in das Steigrohr, und der die Motorwelle führende Lageranordnung.

### Hintergrund der Erfindung

Als vertikale Turbinenpumpen, Englisch auch als Vertical turbine, als halbaxiale Pumpen oder als Bohrlochpumpen bezeichnet, werden Vertikalpumpen bezeichnet, die beispielsweise zur Wasserentnahme aus Flüssen, Brunnen und Bohrlöcher verwendet werden und insbesondere in der Wasserversorgung als auch im industriellen Umfeld eingesetzt werden. Förderhöhen von beispielsweise 40 bis 250 Metern lassen sich durch Hintereinanderschaltung mehrerer Laufräder erreichen.

Vertikale Turbinenpumpen umfassen in der Regel einen Motor, der auf einer Art Sockel oder Motorträger montiert ist. Eine Motorwelle kann entweder direkt an dem Motor befestigt oder mit diesem gekoppelt sein, und erstreckt sich durch eine Säulenhalterung oder eine vertikale Rohranordnung, auch Steigrohr genannt, nach unten in Richtung eines Laufrads. Das Laufrad enthält mehrere Laufradschaufeln, die sich mit dem Motor und der Motorwelle drehen, und derart unten das Fluid in das Steigrohr fördern.

Bei den bekannten vertikalen Turbinenpumpen ist die Motorwelle unterhalb des Motors in der Regel mittels eines Wälzlagers an dem Steigrohr gelagert. Um eine die Lebensdauer drastisch verringerte Überhitzung des Wälzlagers zu vermeiden, werden die meisten Lager durch ein externes Hilfssystem gekühlt. Das Hilfssystem kühlt ein Lageröl des Wälzlagers mittels Kühlschlangen, die in dem Lageröl angeordnet sind und mit einer Kühlflüssigkeit durchströmt werden. Das gekühlte Öl kühlt wiederum das Wälzlager.

Derartige externe Hilfssysteme sind zur Kühlung jedoch zum einen in der Anschaffung kostspielig und müssen im Betrieb regelmäßig gewartet werden, was die Betriebskosten solcher externer Hilfssysteme kostspielig macht. Zwar wurden bereits Anwendungen ohne eine externe Kühlung pilotiert, jedoch erlauben die Ergebnisse bislang keinen stabilen, wartungslosen Betrieb der vertikalen Turbinenpumpen, beispielsweise da der Ölfluss über die Zeit abreißt oder zu viel Luft in das Öl gelangt, was sich negativ auf die Kühlung auswirkt.

EP 0233593 A2 beschreibt eine selbstpumpende Lagerung für Maschinen mit vertikaler Welle, bei der die Lagerelemente von einem mit der Welle rotierenden Ölbehälter umgeben sind.

WO 2007/040427 A1 beschreibt eine Lagervorrichtung zum Lagern einer Welle eines Zyklonabscheiders, wobei die Welle um eine Drehachse in einem Rahmen drehbar ist. DE 3214030 A1 beschreibt eine Wellenkupplung zwischen elektrischem Antriebsmotor und Pumpenwelle von senkrecht aufgestellten, mit einer Traglaterne versehenen Kreiselpumpe.

US 2014093201 A1 beschreibt eine selbstpumpende Lagerung für vertikale Pumpenwellen, bei der die Ölkühlung durch einen Ölabweiser gewährleistet ist, der in einer Ölwanne angeordnet ist.

### Beschreibung der Erfindung

Ausgehend von dieser Situation ist es eine Aufgabe der vorliegenden Erfindung, eine Lageranordnung zum Führen einer Motorwelle zum Abstützen von Axial- und/oder Radialkräften einer vertikalen Turbinenpumpe anzugeben, die ohne ein externe Kühlungssysteme eine verlässliche Kühlung eines Lagers der Lageranordnung gewährleistet.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Lageranordnung zum Führen einer Motorwelle einer vertikalen Turbinenpumpe mit
einem Lager aufweisend einen drehfest mit der Motorwelle verbindbaren Innenring und einen Außenring,
einer mit einem Öl gefüllten Ölwanne, in welcher das Lager wenigstens zum Teil in das Öl eingetaucht angeordnet ist, und
einen mit dem Innenring drehfest verbundenen inneren Ölabweiser, welcher aufgrund einer Drehung des Lagers zwischen dem Innenring und dem Außenring hindurch gefördertes Öl zurück in die Ölwanne ablenkt.

Ein wesentlicher Punkt der vorgeschlagenen Lösung liegt in einer passiven Kühlung des Lagers, so dass kein externes und in der Regel kostspieliges Hilfssystem zur Kühlung des Lagers benötigt wird. Derart lassen sich die Betriebskosten der vertikalen Turbinenpumpe reduzieren. Ferner ermöglicht der vorgeschlagene innere Ölabweiser eine homogene Temperatur in dem Lager, was die Lebensdauer des Lagers und des zur Kühlung verwendeten Öl optimiert. Im Ergebnis reduziert die vorgeschlagene Lösung ein Risiko von Ausfällen, erhöht also die Betriebsstabilität der vertikalen Turbinenpumpe. Zudem hat sich experimentell gezeigt, dass gegenüber anderen aus dem Stand der Technik bekannten Ausgestaltungen passiver Kühlungen bei der vorgeschlagenen Lösung kein Abriss des Ölstroms erfolgt, was zu einer besseren Wärmeübertragung und derart Kühlung des Lagers führt. Mit anderen Worten funktionieren aus dem Stand der Technik bekannte Ausgestaltungen mit passiven Kühlungen schlichtweg nicht zuverlässig.

Als vertikale Turbinenpumpe werden in der Regel Vertikalpumpen bezeichnet, die sich für Brunnen- oder Bohrlöcher verwenden lassen. Derartige vertikale Turbinenpumpen weisen oftmals ein Steigrohr auf, in der die Motorwelle vorgesehen ist und an dem das Lager gehalten sein kann. Das Steigrohr kann mehrere Meter lang sein, so dass die vertikale Turbinenpumpe oftmals axial entlang einer Achse des Steigrohrs bzw. der Motorwelle wesentlich länger als radial breit ist. Das Steigrohr erstreckt sich regelmäßig größtenteils unterhalb einer Bodenplatte, auf der die vertikale Turbinenpumpe befestigt sein kann. Das Steigrohr ist bevorzugt aus Metall gestaltet und/oder weist einen kreisrunden oder kreisartigen Querschnitt auf.

Der Innenring kann entweder direkt oder indirekt beispielsweise mittels Distanzstücke mit der Motorwelle verbunden sein, insbesondere form- und/oder kraftschlüssig. Ebenso ist der Außenring entweder direkt oder indirekt beispielsweise mittels Distanzstücke mit einer später beschriebenen Außenwand der Lageranordnung, mit dem Steigrohr und/oder mit einem später beschriebenen Krümmergehäuse verbunden sein, insbesondere form- und/oder kraftschlüssig. Die Ölwanne erstreckt sich bevorzugt, in axialer Draufsicht, umlaufend um die Motorwelle herum und/oder ist in axialer Seitansicht bzw. vertikal beabstandet unterhalb dem Innenring und/oder dem Außenring angeordnet. Sofern im Rahmen der Anmeldung von axial und/oder radial gesprochen wird, beziehen sich diese Begriffe insbesondere auf die Motorwelle bzw. einer axialen Erstreckung derselben entlang einer Achse.

Die Ölwanne ist bevorzugt axial nach unten geschlossen und axial nach oben insbesondere zum Teil geöffnet, so dass einerseits Öl zwischen den Innenring und dem Außenring gelangen und andererseits abgelenkt durch den inneren Ölabweiser zurück in die Ölwanne gelangen kann. Bevorzugt ist das Lager vollständig in das Öl eingetaucht. Als Öl lässt sich jedes aus dem Stand der Technik bekannte Öl zum Kühlen des Lagers verwenden. Öl als Kühlmittel hat den Vorteil, dass es elektrisch isolierend ist, eine gute Schmierwirkung besitzt und korrosionshemmend für Metalle ist. Durch Drehung des Lagers, als wenn aufgrund einer Drehung der Motorwelle der Innenring gegenüber dem Außenring dreht, wirkt eine Zentrifugalkraft auf das zwischen dem Innenring und dem Außenring befindliche Öl, welches derart durch das Lager aus der Ölwanne pumpenartig heraus gefördert wird.

Der innere Ölabweiser ist bevorzugt axial oberhalb des Innenrings und/oder des Außenrings vorgesehen, insbesondere in axialer Verlängerung einer von einem zwischen dem Innenring und dem Außenring vorgesehenen Wälzkörpers definierten Lagerachse. Die so definierte Lagerachse kann sich parallel zu der Achse der Motorwelle erstrecken. Bevorzugt ist das Lager wie weiter unten beschrieben als Kegelrollenlager mit geneigten Wälzkörpern gestaltet, so dass die so definierte Lagerachse gegenüber der Achse der Motorwelle geneigt ist, sich insbesondere radial weg von dieser axial nach oben erstreckt. Das durch das Lager geförderte Öl wird bevorzugt von einer in Bezug auf die vertikale Turbinenpumpe nach unten orientierte Innenfläche des inneren Ölabweisers abgelenkt, fließt also insbesondere nicht über eine nach oben orientierte Außenfläche des inneren Ölabweisers. Derart wird vermieden, dass Luft dem abgelenketen Öl zugemengt wird, was sich negativ auf die Kühlungswirkung auswirken würde.

Zur Ausgestaltung des inneren Ölabweisers existieren verschiedene Möglichkeiten. Nach einer bevorzugten Ausgestaltung erstreckt sich der innere Ölabweiser von dem Innenring radial nach außen und/oder, in axialer Draufsicht, ringartig um den Innenring herum. Insbesondere erstreckt sich der innere Ölabweiser von der Motorwelle radial weg. Der innere Ölabweiser ist bevorzugt scheibenartig gestaltet, insbesondere nach Art einer entsprechend für die vertikale Turbinenpumpe dimensionierten Unterlegscheibe. Bevorzugt ist der innere Ölabweiser aus Metall gestaltet, insbesondere aus einem Edelmetall.

Gemäß einer weiteren bevorzugten Ausgestaltung ist der innere Ölabweiser, in axialer Seitansicht, oberhalb der Ölwanne, insbesondere oberhalb des Lagers, angeordnet und erstreckt sich von dem Innenring schirmförmig, bogenförmig und/oder axial schräg nach unten und radial weg in Richtung der Ölwanne. Insofern kann der innere Ölabweise, in axialer Seitansicht, sich zunächst von der Motorwelle radial weg erstrecken und in der Folge, insbesondere kreisbogenartig, nach unten in Richtung der Ölwanne gebogen sein. Besonders bevorzugt ist eine Tangentiale des inneren Ölabweisers annähernd senkrecht zu der axialen Verlängerung der durch zwischen dem Innenring und dem Außenring vorgesehenen Wälzkörper definierten Lagerachse, sodass das durch das Lager geförderte Öl annähernd senkrecht auf die Tangentiale auftreten und entsprechend von dem inneren Ölabweiser abgelenkt wird.

Nach einer anderen bevorzugten Ausgestaltung ist eine die Ölwanne radial begrenzende Außenwand vorgesehen, an welcher außenseitig eine Mehrzahl Kühlrippen ausgebildet sind. Die Außenwand stellt bevorzugt ebenso die Außenwand der Lageranordnung dar. Die Kühlrippen erstrecken sich bevorzugt in axialer Richtung und sind bei Abstand zueinander angeordnet. Bevorzugt sind die Kühlrippen radial umlaufend um die Außenwand vorgesehen. Durch die Kühlrippen lässt sich das von dem inneren Ölabweiser abgelenkte und in der Folge insbesondere an der Außenwand zurück in die Ölwanne laufende Öl in effektiver Weise kühlen, ohne dass es eine externe Kühleinrichtung wie aus dem Stand der Technik bekannt bedarf.

Wie zuvor beschrieben, ist der innere Ölabweiser drehfest an den Innenring vorgesehen, sodass sich der innere Ölabweiser durch eine Drehung der Motorwelle mit dreht. Gemäß einer weiteren bevorzugten Ausgestaltung ist zusätzlich ein mit dem Außenring drehfest verbundenen äußeren Ölabweiser vorgesehen, welcher in Bezug auf die Ölwanne axial oberhalb dem inneren Ölabweiser angeordnet ist. Gemäß einer weiteren bevorzugten Ausgestaltung erstreckt sich der äußere Ölabweiser insbesondere von der Außenwand radial nach innen und/oder, erstreckt sich in axialer Draufsicht ringartig um den Innenring herum. Dieser weitere äußere Ölabweiser ist bevorzugt beabstandet jedoch benachbart zu dem darunter angeordneten inneren Ölabweiser angeordnet. Der äußere Ölabweiser kann direkt mit dem Außenring verbunden sein oder indirekt, beispielsweise mittels der Außenwand, mit der der Außenring bevorzugt ortsfest verbunden ist. Insofern erstreckt sich der äußere Ölabweiser bevorzugt von der Außenwand und umlaufend um die Motorwelle in Richtung der Motorwelle, berührt diese jedoch nicht. Der äußere Ölabweiser kann ebenso wie der innere Ölabweiser scheibenartig aus einem Metall gestaltet sein. Durch den äußeren Ölabweiser lässt sich durch den inneren Ölabweiser eventuell nicht abgelenktes Öl zurück in die Ölwanne ablenken. Bevorzugt berührt der innere Ölabweiser die Außenwand nicht, sodass das von dem äußeren Ölabweiser abgelenktes Öl durch einen zwischen dem inneren Ölabweiser und der Außenwand fließen kann.

Gemäß einer weiteren bevorzugten Ausgestaltung weist die Lageranordnung eine die Ölwanne radial begrenzenden Außenwand auf, an welcher der Außenring vorgesehen ist, wobei zwischen der Außenwand und dem Außenring eine sich, in axialer Draufsicht, um den Außenring herum erstreckende Auffangwanne zum Auffangen des von dem inneren Ölabweisers abgelenkten Öls vorgesehen ist. Die Außenwand kann aus Aluminium gestaltet sein, während die übrige Lageranordnung aus einem anderen Metall gestaltet sein kann. Insofern kann die Außenwand in Bezug auf die übrige Lageranordnung zweiteilig mit dieser gestaltet sein, wobei ebenso auch eine einteilige Gestaltung denkbar ist. Die Auffangwanne ist bevorzugt nach oben offen gestaltet und/oder erstreckt sich ringförmig um die Motorwelle. Die Auffangwanne ist bevorzugt unterhalb eines radialen Endes des inneren Ölabweisers angeordnet, sodass ungelenkes Öl von dem inneren Ölabweiser in die Auffangwanne abtropfen kann.

Nach einer anderen bevorzugten Ausgestaltung sind zwischen der Auffangwanne und der Ölwanne eine Mehrzahl beabstandeter, sich axial erstreckender Verbindungsöffnungen zum Abfließen des in der Auffangwanne aufgefangenen Öls in die Ölwanne vorgesehen. Die Verbindungsöffnungen können als Kanäle ausgestaltet sein, die ein Gefälle radial nach innen zu der Ölwanne aufweisen.

Gemäß einer weiteren bevorzugten Ausgestaltung ist das Lager als Radiallager, als Axiallager und/oder als Schrägkugellager gestaltet. Ferner bevorzugt ist das Lager als Wälzläger gestaltet. Als Wälzkörper können Kugeln, Kegeln oder Zylinder vorgesehen sein. Ebenso können andere Ausgestaltungen des Lagers möglich sein. Bevorzugt sind die zueinander gewandten Flächen des Innenrings und des Außenrings in Bezug auf die Achse der Motorwelle schräg angeordnet, insbesondere in einem Winkel von 45°.

Die Aufgabe der Erfindung wird weiterhin gelöst durch die vertikale Turbinenpumpe mit
einem sich entlang einer Achse erstreckenden Steigrohr,
der in dem Steigrohr angeordneten Motorwelle,
einem an einem oberen Steigrohrende angeordneten und die Motorwelle antreibenden Motor,
einem an einem entgegengesetzten, unteren Steigrohrende angeordneten und von der Motorwelle angetriebenen Laufrad zum Fördern eines Fluids in das Steigrohr, und
einer die Motorwelle führende Lageranordnung nach einem der vorhergehenden Ansprüche.

Nach einer bevorzugten Weiterbildung weist die vertikale Turbinenpumpe einen druckseitigen, an einem ersten dem Laufrad zugewandten Krümmerende mit dem Steigrohr verbundenen Krümmer auf, der eine Krümmung stetig weg von der Achse und einen Auslass an einem entgegensetzten zweiten Krümmerende für das geförderte Fluid aufweist, wobei sich ein radialer Durchmesser als Höhe des Krümmers von dem ersten Krümmerende hin zu dem zweiten Krümmerende zunächst verringert und daraufhin vergrößert.

Der Krümmer ist bevorzugt als Rohrbogen oder rohrbogenartig gestaltet und/oder weist in Seitansicht eine kreisbogenartige oder elliptische Form auf. Der Krümmer erstreckt sich bevorzugt über einen Kreisbogen oder kreisbogenartig über 90°, wobei auch andere Werte wie beispielsweise 80° oder 100° möglich sind. Insofern bedeutet das Merkmal, dass der Krümmer eine Krümmung stetig weg von der Achse aufweist, gerade nicht, dass sich der Krümmer zunächst in eine Richtung entgegen den zweiten Krümmerende erstreckt, beispielsweise eine S-förmige Form aufweist, sondern sich linear und/oder stetig, insbesondere in Seitansicht kreisbogenartig oder elliptisch, hinsichtlich seiner radialen Mittellinie von der Achse bzw. dem Steigrohr kontinuierlich weiter weg erstreckt. Ferner ist das Merkmal, dass der Krümmer eine Krümmung stetig weg von der Achse aufweist, insbesondere synonym zu dem Merkmal, dass sich der Krümmer hinsichtlich seiner radialen insbesondere kreisbogenartigen Mittellinie stetig von der Achse weg erstreckt, zu verstehen. Im Falle einer elliptischen sich insbesondere über 90° erstreckenden Form verläuft die Nebenachse der Ellipse bevorzugt parallel zu der Achse und/oder verläuft die Hauptachse horizontal.

Das Merkmal, dass sich der radiale Durchmesser als Höhe des Krümmers von dem ersten Krümmerende hin zu dem zweiten Krümmerende zunächst verringert und daraufhin vergrößert, bedeutet insbesondere, dass an wenigstens einer Position zwischen dem ersten Krümmerende und dem zweiten Krümmerende die Höhe des Krümmers geringer ist als die Höhe an den ersten Krümmerende und/oder an dem zweiten Krümmerende. In Seitansicht weist der Krümmer eine insbesondere ,abgeflachte' Form auf. Insbesondere kann der Krümmer wiederum in Seitansicht an seiner Außenseite eine ,eingedellte' Form aufweisen, wobei an der ,Delle' die Höhe insbesondere maximal verringert ist. Als radialer Durchmesser wird insbesondere ein radialer Innendurchmesser des Krümmers verstanden, der ein lichte Höhe in dem Krümmer definiert, durch welche das Fluid strömen kann. Insofern kann, wenn von einer Verringerung oder Vergrößerung des Durchmessers gesprochen wird, neben dem Innendurchmesser auch der Außendurchmesser gemeint sein.

Der Motor und der Krümmer sind vorzugsweise oberhalb der Bodenplatte angeordnet, dass das Steigrohr knapp oberhalb oder an der Bodenplatte insbesondere fluiddicht mit dem ersten Krümmerende verbunden ist und der Motor vertikal oberhalb des Krümmers angeordnet ist. Die Motorwelle erstreckt sich bevorzugt in axialer Richtung entlang der Mittellinie des Steigrohrs und tritt dazu in axialer Verlängerung des Steigrohrs an einer Außenseite durch den rohrförmigen Krümmer hindurch. An dieser Außenseite kann insofern eine Öffnung in dem Krümmer vorgesehen sein, durch die die Motorwelle hindurchtritt. Bevorzugt ist eine Dichtung, insbesondere eine Radialdichtung, vorgesehen, die in der Öffnung angeordnet ist und die Motorwelle radial umlaufend fluiddicht gegenüber dem Krümmer abdichtet.

Ein wesentlicher, nachfolgend noch näher beschriebener Aspekt die Ausgestaltung liegt darin, dass der Krümmer nach Art eines ,Cobra-Kopfes' gestaltet sein kann, nämlich die Höhe des Krümmers zwischen den beiden Krümmerenden verringert ist. Dadurch lässt sich ein Abstand zwischen dem Motor und einer Bodenplatte verringern, was sich positiv auf die Steifigkeit und Eigenfrequenz, und natürlich auch auf die Herstellungskosten der vertikalen Turbinenpumpe, auswirkt. Mit anderen Worten ist die vorgeschlagene vertikale Turbinenpumpe weniger schwingungsanfällig, was die Betriebsstabilität der vertikalen Turbinenpumpe verbessert. Durch die geringere vertikale Höhe lässt sich die vertikale Turbinenpumpe einfacher warten oder reparieren, da es im Bedarfsfall einfacher, den insbesondere oberirdisch angerochenen Motor und/oder den Krümmer anzunehmen. Ferner reduziert der Krümmer mit zwischen den beiden Krümmerenden verringerter Höhe mögliche Verwirbelungen am Auslass, was sich positiv auf eine Messgenauigkeit von Druck und Durchfluss eines am Auslass vorgesehenen Sensors auswirkt. Schließlich verbessert der vorgeschlagene Krümmer auch die hydraulischen Eigenschaften der vertikalen Turbinenpumpe.

Nach einer bevorzugten Weiterbildung verringert sich der radiale Durchmesser zunächst und vergrößert sich daraufhin stetig. Der radiale Durchmesser kann sich kontinuierlich verringern und/oder vergrößern, wobei es auch möglich ist, dass der radiale Durchmesser streckenweise konstant bleibt, um sich in der Folge zu verringern und/oder zu vergrößern. Besonders bevorzugt verringert und/oder vergrößert sich der radiale Durchmesser nicht sprungartig, sondern insbesondere linear.

Nach einer besonders bevorzugten Ausgestaltung vergrößert sich ein axialer Durchmesser als Breite des Krümmers von dem ersten Krümmerende hin zu dem zweiten Krümmerende zunächst und verringert sich daraufhin. Das bedeutet insbesondere, dass an wenigstens einer Position zwischen dem ersten Krümmerende und dem zweiten Krümmerende die Breite des Krümmers größer als die Breite an den ersten Krümmerende und/oder an dem zweiten Krümmerende ist. In Draufsicht, insbesondere in Richtung eines Radius des Krümmers, weist der Krümmer eine insbesondere in der Mitte seiner Erstreckung verbreitete Form auf. Insbesondere kann der Krümmer wiederum in Draufsicht an eine Ausbeulung aufweisen, wobei an der axialen ,Beule' die Breite insbesondere maximal vergrößert ist. Als axialer Durchmesser wird insbesondere ein axialer Innendurchmesser des Krümmers verstanden, der eine lichte Breite innerhalb des Krümmers definiert, durch welche das Fluid strömen kann.

In einer weiteren bevorzugten Ausgestaltung ist vorgesehen, dass ein Querschnitt des Krümmers im Verlauf zwischen dem ersten Krümmerende und dem zweiten Krümmerende stets gleich groß ist. Das bedeutet, dass, wenn sich im Verlauf zwischen dem ersten Krümmerende und dem zweiten Krümmerende die Höhe des Krümmers verringert, sich die Breite des Krümmers entsprechend vergrößert.

Nach einer anderen bevorzugten Ausgestaltung ist zwischen dem Motor und dem Krümmer eine Antriebslaterne mit einer zwischen Motor und Motorwelle vorgesehen Kupplung angeordnet, wobei die Antriebslaterne und der Krümmer einschließlich eines vorzugsweise den Krümmer aufweisenden Krümmergehäuses ein- oder mehrteilig, insbesondere zweiteilig ausgeführt sind. Bevorzugt weisen die Antriebslaterne und/oder das Krümmergehäuse in Draufsicht einen rechteckartigen Querschnitt auf und/oder sind quaderartig gestaltet. Das Krümmergehäuse ist bevorzugt auf der Bodenplatte oder dergleichen ortsfest montiert, insbesondere verschraubt. Vertikal und/oder axial unterhalb der Bodenplatte erstreckt sich bevorzugt das Steigrohr, welches bevorzugt ebenso mit der Bodenplatte und/oder dem Krümmergehäuse ortsfest montiert, insbesondere verschraubt ist. Bevorzugt in axialer Verlängerung des Steigrohres ist die Antriebslaterne ortsfest zwischen Krümmergehäuse und Motor fixiert, insbesondere mit dem Krümmergehäuse und dem Motor verschraubt.

Gemäß einer weiteren bevorzugten Weiterbildung weist der Krümmer zwischen dem ersten, einen insbesondere kreisrunden Querschnitt aufweisenden Krümmerende und dem zweiten, einen insbesondere kreisrunden Querschnitt aufweisenden Krümmerende einen sich insbesondere stetig verändernden elliptischen Querschnitt auf. Bevorzugt erstreckt sich die Nebenachse des elliptischen Querschnitts in radialer Richtung bezogen auf den Krümmer als Höhe des Krümmers, während sich die Hauptachse des elliptischen Querschnitts orthogonal dazu als Breite des Krümmers erstreckt. Nach einer anderen bevorzugten Ausgestaltung weisen das erste Krümmerende und das zweiter Krümmerende einen gleich großen insbesondere kreisrunden Querschnitt auf.

Gemäß einer weiteren bevorzugten Weiterbildung vergrößert sich ein Radius eines radialen inneren Krümmerrandes von dem ersten Krümmerand hin zu dem zweiten Krümmerrand insbesondere stetig. Mit anderen Worten flacht bzw. verringert sich die Krümmung des radialen inneren Krümmerrandes, also derart insbesondere ebenso des Krümmers, von dem ersten Krümmerand hin zu dem zweiten Krümmerrand insbesondere stetig ab. Derart lässt sich der Krümmer bezogen auf die Achse des Steigrohres mit einer geringen Höhe gestalten, wodurch der Motor näher an die Bodenplatte rückt, so dass Schwingungen verringert werden, was zu einem stabileren Betrieb der vertikalen Turbinenpumpe führt.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine schematische Schnittansicht einer vertikalen Turbinenpumpe gemäß einem bevorzugten Ausführungsbeispiel der Erfindung,
- Fig. 2: eine schematische Schnittansicht einer Lageranordnung zum Führen einer Motorwelle der vertikalen Turbinenpumpe gemäß Fig. 1 gemäß dem bevorzugten Ausführungsbeispiel der Erfindung, und
- Fig. 3: eine schematisch perspektivische Teilschnittansicht der Lageranordnung zum Führen der Motorwelle der vertikalen Turbinenpumpe gemäß Fig. 2 gemäß dem bevorzugten Ausführungsbeispiel der Erfindung.

### Detaillierte Beschreibung der Ausführungsbespiele

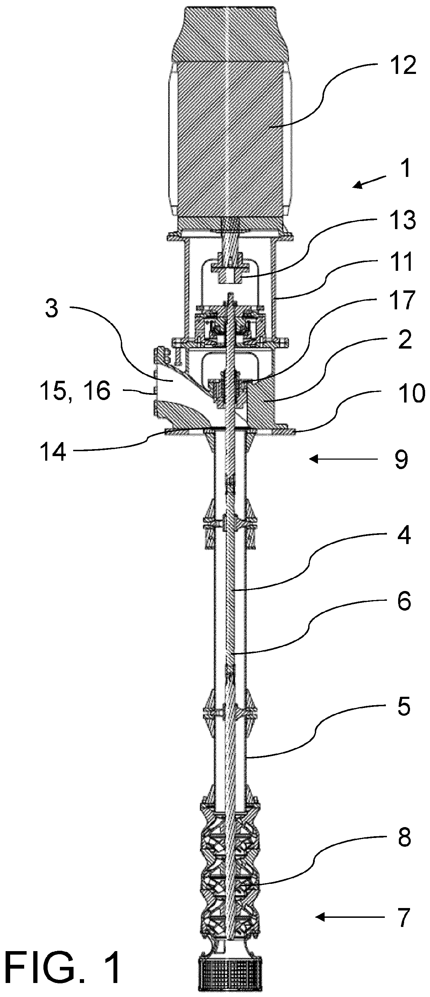

Fig. 1 zeigt eine schematische Schnittansicht einer vertikalen Turbinenpumpe 1 mit einem Krümmergehäuse 2 aufweisend einen Krümmer 3 gemäß einem bevorzugten Ausführungsbeispiel der Erfindung.

Die vertikale Turbinenpumpe 1 weist ein sich entlang einer Achse 4 erstreckendes Steigrohr 5 mit einem kreisrunden äußeren Querschnitt auf, das mehrere miteinander verbundene Segmente aufweist. Mittig in dem metallenen Steigrohr 5 erstreckt sich entlang der Achse 4 und entlang der gesamten Länge des Steigrohrs 5 eine Motorwelle 6 derart, dass radial umlaufend um die Motorwelle 6 zwischen dieser und dem Steigrohr 5 ein Freiraum ausgebildet ist, durch den durch die vertikale Turbinenpumpe 1 gefördertes Fluid axial nach oben steigt. Dazu sind an einem unteren Steigrohrende 7 mehrere axial übereinander angeordnete Laufräder 8 vorgesehen, die durch die Motorwelle 6 angetrieben werden, das Fluid ansaugen und in den Freiraum fördern.

Das Steigrohr 5 ist mit seinem oberen Steigrohrende 9 an einer Bodenplatte 10 befestigt, so dass sich das Steigrohr 5 von der Bodenplatte 10 vertikal weg nach unten erstreckt. Oberhalb der Bodenplatte 5 schließt sich vertikal bzw. in Richtung der Achse 4 nach oben zunächst das Krümmergehäuse 2 an, an welches sich wiederum axial eine Antriebslaterne 11 sowie schließlich einen die Motorwelle 6 antreibenden Motor 12 anschließt. In der Antriebslaterne 11 ist eine Kupplung 13 angeordnet, welche zwischen den Motor 12 und die Motorwelle 6 geschaltet ist. Das Krümmergehäuse 2 und die Antriebslaterne 11 sind zweiteilig gestaltet und miteinander verschraubt. Das obere Steigrohrende 9 ist fluiddicht mit einem ersten entsprechend dem Laufrad 8 zugewandten Krümmerende 14 des Krümmers 3 verbunden.

Der Krümmer 3 weist an einem dem ersten Krümmerende 14 entgegengesetzt angeordneten zweiten Krümmerende 15 einen Auslass 16 für das geförderte Fluid auf. Der rohrförmige Krümmer 3 leitet das geförderte Fluid von der Vertikalen in die Horizontale um, so dass Querschnittsflächen an dem ersten Krümmerende 14 und dem zweiten Krümmerende 15 um 90° versetzt zueinander angeordnet sind. Dazu sind die inneren Querschnittsflächen der beiden Krümmerenden 14, 15 einerseits gleich groß und andererseits kreisrund ausgebildet.

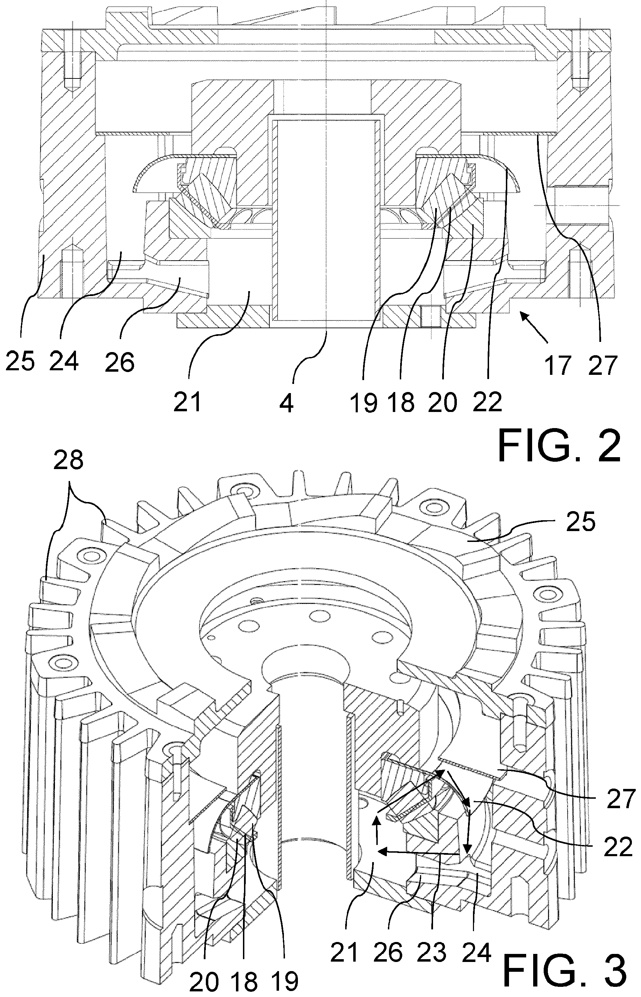

Innerhalb des Krümmergehäuses 2 ist die Motorwelle 6 durch eine in Figs. 2 und 3 detaillierter gezeigte Lageranordnung 17 geführt, welches ortsfest mit dem Krümmergehäuse 2 verbunden ist. Die Lageranordnung 17 weist ein Lager 18 auf, welches vorliegend als Wälzlager mit Rollen, oder alternativ als Schrägkugellager, insbesondere als Kegelrollenlager, gestaltet ist. Ein Innenring 19 des Lagers 18 ist drehfest mit der Motorwelle 6 verbunden und dreht sich entsprechend mit der Motorwelle 6, die in Figs. 2 und 3 nicht gezeigt ist. Das Lager 18 erstreckt sich radial umlaufend um die Motorwelle 6 herum. Ein Außenring 20 ist drehfest mit dem Krümmergehäuse 2 verbunden.

Die Lageranordnung 17 weist weiterhin eine vertikal bzw. bezogen auf die Achse 4 axial unterhalb des Lagers 18 angeordnete Ölwanne 21 auf, die sich ebenso radial umlaufend um die Motorwelle 6 herum erstreckt. Die Ölwanne 21 ist mit nicht gezeigtem Öl derart gefüllt, dass das Lager 18 einschließlich des Innenrings 19 und des Außenrings 20 vollständig mit Öl bedeckt ist.

Schließlich weist die Lageranordnung 17 einen inneren Ölabweiser 22 auf, der mit dem Innenring 19 drehfest verbunden ist und sich radial weg von der Motorwelle 6 weg erstreckt. Der innere Ölabweiser 22 ist vertikal bzw. bezogen auf die Achse 4 axial oberhalb und beabstandet zu dem Lager 18 angeordnet und, in axialer Draufsicht, scheibenartig, die Motorwelle 6 mittig einfassend gestaltet. In axialer Seitansicht weist der innere Ölabweiser 22 wie in Fig. 2 zu erkennen eine regenschirmartige Form auf, da sich der innere Ölabweiser 22 von der Motorwelle 6 das Lager 18 axial überdeckend zunächst radial weg erstreckt, und dann viertelkreisartig nach unten in Richtung Ölwanne 21 gebogen ist.

Durch eine Drehbewegung der Motorwelle 6 drehen sich die Kegelrollen des Lagers 18. Aufgrund der Zentrifugalkraft wird im dem Lager 18 befindliches Öl durch die Kegelrollen auf der Ölwanne 21 zwischen dem Innenring 19 und dem Außenring 20 schräg nach oben pumpenartig weg von der Motorwelle 6 gefördert, angedeutet in Fig. 3 durch Pfeile 23. Da der regenschirmartig bzw. suppentellerartig gebogene innere Ölabweiser 22 axial oberhalb des Lagers 18 angeordnet ist, trifft das derart geförderte Öl auf den inneren Ölabweiser 22, der das Öl axial nach unten ablenkt, so dass das abgelenkte Öl an dem viertelkreisartigen Ende des inneren Ölabweisers 22 nach unten abtropft.

Axial unterhalb des gebogenen Bereiches der inneren Ölabweisers 22 ist ein in axialer Draufsicht sich um die Motorwelle 6 herum erstreckende ringartige Auffangwanne 24 zum Auffangen des von dem inneren Ölabweiser 18 abgelenkten Öls vorgesehen. Die Auffangwanne 24 erstreckt in axialer Richtung zwischen dem Außenring 20 und einer die Ölwanne 21 radial begrenzenden Außenwand 25 der Lageranordnung 17.

Zwischen der Auffangwanne 24 und der Ölwanne 21 sind eine Mehrzahl beabstandeter, sich axial nach innen hin in Richtung der Motorwelle 23 erstreckender leicht in Richtung der Achse 4 abschüssiger Verbindungsöffnungen 26 in Form von Kanälen vorgesehen, durch welche das in der Auffangwanne 26 aufgefangene Öl zurück in die Ölwanne 21 abfließen kann, wie durch Pfeile 23 angedeutet. Von dort kann das Öl erneut durch das Lager 18 wie zuvor beschrieben gefördert werden.

Neben dem inneren Ölabweisers 22 ist ein weitere Ölabweiser in Form eines äußeren Ölabweiser 27 vorgesehen, der drehfest mit dem Außenring 20 bzw. derart mit der Außenwand 25 angeordnet ist und sich von dieser radial weg in Richtung der Achse 4 erstreckt. Bezug nehmend auf die Ölwanne 21 ist der äußere Ölabweiser 27 axial oberhalb des inneren Ölabweisers 22 angeordnet. Ebenso wie der innere Ölabweiser 22 ist der äußere Ölabweiser 27 scheibenartig gestaltet und erstreckt sich um die Motorwelle 6 umlaufend herum, weist jedoch keine Krümmung auf. Der äußere Ölabweiser 27 dient dazu, von dem inneren Ölabweiser 22 nicht umgelenktes Öl in die Ölwanne 21 abzulenken.

Schließlich sind umlaufend um die Lageranordnung 17 an der Außenwand 25 derselben eine Mehrzahl sich axial erstreckender Kühlrippen 27 ausgebildet, durch welche das Öl, Insbesondere das zurück in die Ölwanne 21 strömende Öl, gekühlt wird. Die Außenwand 26 bzw. die Lageranordnung 17 ist dazu aus Metall gestaltet, wobei die Kühlrippen 27 aus Aluminium geformt sein können.

Die beschriebenen Ausführungsbeispiels sind lediglich Beispiele, die im Rahmen der Ansprüche auf vielfältige Weise modifiziert und/oder ergänzt werden können.

### Bezugszeichenliste

| | |
|---|---|
| Vertikale Turbinenpumpe | 1 |
| Krümmergehäuse | 2 |
| Krümmer | 3 |
| Achse | 4 |
| Steigrohr | 5 |
| Motorwelle | 6 |
| Unteres Steigrohrende | 7 |
| Laufrad | 8 |
| Oberes Steigrohrende | 9 |
| Bodenplatte | 10 |
| Antriebslaterne | 11 |
| Motor | 12 |
| Kupplung | 13 |
| Erstes Krümmerende | 14 |
| Zweites Krümmerende | 15 |
| Auslass | 16 |
| Lageranordnung | 17 |
| Lager | 18 |
| Innenring | 19 |
| Außenring | 20 |
| Ölwanne | 21 |
| Innerer Ölabweiser | 22 |
| Pfeile | 23 |
| Auffangwanne | 24 |
| Außenwand | 25 |
| Verbindungsöffnung | 26 |
| Äußerer Ölabweiser | 27 |
| Kühlrippen | 28 |

## Patentansprüche

1. Lageranordnung (17) zum Führen einer Motorwelle (6) und/oder zum Abstützen von Axial- und/oder Radialkräften einer vertikalen Turbinenpumpe (1) mit
einem Lager (18) aufweisend einen drehfest mit der Motorwelle (6) verbindbaren Innenring (19) und einen Außenring (20),
einer mit einem Öl gefüllten Ölwanne (21), in welcher das Lager (18) wenigstens zum Teil in das Öl eingetaucht angeordnet ist, und
einen mit dem Innenring (19) drehfest verbundenen inneren Ölabweiser (22), welcher aufgrund einer Drehung des Lagers (18) zwischen dem Innenring (19) und dem Außenring (20) hindurch gefördertes Öl zurück in die Ölwanne (21) ablenkt.

2. Lageranordnung (17) nach dem vorhergehenden Anspruch, wobei sich der innere Ölabweiser (22) von dem Innenring (19) radial nach außen und/oder, in axialer Draufsicht, ringartig um den Innenring (19) herum erstreckt.

3. Lageranordnung (17) nach einem der vorhergehenden Ansprüche, wobei der innere Ölabweiser (22), in axialer Seitansicht, oberhalb der Ölwanne (21) angeordnet ist und sich von dem Innenring (19) schirmförmig und/oder axial schräg nach unten und radial weg in Richtung der Ölwanne (21) erstreckt.

4. Lageranordnung (17) nach einem der vorhergehenden Ansprüche, mit einer die Ölwanne (21) radial begrenzenden Außenwand (25), an welcher außenseitig eine Mehrzahl Kühlrippen (28) ausgebildet sind.

5. Lageranordnung (17) nach einem der vorhergehenden Ansprüche, mit einem mit dem Außenring (20) drehfest verbundenen äußeren Ölabweiser (27), welcher in Bezug auf die Ölwanne (21) axial oberhalb dem inneren Ölabweiser (22) angeordnet ist.

6. Lageranordnung (17) nach dem vorhergehenden Anspruch, wobei sich der äußere Ölabweiser (27) insbesondere von der Außenwand (25) nach dem vorhergehenden Anspruch 4, radial nach innen erstreckt und/oder, in axialer Draufsicht, sich ringartig um den Innenring (19) herum erstreckt.

7. Lageranordnung (17) nach einem der vorhergehenden Ansprüche, mit einer die Ölwanne (21) radial begrenzenden Außenwand (25), an welcher der Außenring (20) vorgesehen ist, wobei zwischen der Außenwand (25) und dem Außenring (20) eine sich, in axialer Draufsicht, um den Außenring (20) herum erstreckende Auffangwanne (24) zum Auffangen des von dem inneren Ölabweiser (22)s abgelenkten Öls vorgesehen ist.

8. Lageranordnung (17) nach dem vorhergehenden Anspruch, wobei zwischen der Auffangwanne (24) und der Ölwanne (21) eine Mehrzahl beabstandeter, sich axial erstreckender Verbindungsöffnungen (26) zum Abfließen des in der Auffangwanne (24) aufgefangenen Öls in die Ölwanne (21) vorgesehen sind.

9. Lageranordnung (17) nach einem der vorhergehenden Ansprüche, wobei das Lager (18) als Radiallager, als Axiallager und/oder als Schrägkugellager gestaltet ist.

10. Vertikale Turbinenpumpe (1) mit
einem sich entlang einer Achse (4) erstreckenden Steigrohr (5),
einer in dem Steigrohr (5) angeordneten Motorwelle (6),
einem an einem oberen Steigrohrende (9) angeordneten und die Motorwelle (6) antreibenden Motor (12),
einem an einem entgegengesetzten, unteren Steigrohrende (7) angeordneten und von der Motorwelle (6) angetriebenen Laufrad (8) zum Fördern eines Fluids in das Steigrohr (5), und
einer die Motorwelle (6) führende Lageranordnung (17) nach einem der vorhergehenden Ansprüche.

11. Vertikale Turbinenpumpe (1) nach dem vorhergehenden Anspruch, mit einem druckseitigen, an einem ersten dem Laufrad (8) zugewandten Krümmerende (14) mit dem Steigrohr (5) verbundenen Krümmer (3) aufweisend eine Krümmung stetig weg von der Achse (4) und einen Auslass (16) an einem entgegensetzten zweiten Krümmerende (15) für das geförderte Fluid, wobei sich ein radialer Durchmesser als Höhe des Krümmers (3) von dem ersten Krümmerende (14) hin zu dem zweiten Krümmerende (15) zunächst verringert und daraufhin vergrößert.

12. Vertikale Turbinenpumpe (1) nach dem vorhergehenden Anspruch, wobei sich der radiale Durchmesser zunächst stetig verringert und daraufhin stetig vergrößert.

13. Vertikale Turbinenpumpe (1) nach einem der zwei vorhergehenden Ansprüche, wobei sich ein axialer Durchmesser als Breite des Krümmers (3) von dem ersten Krümmerende (14) hin zu dem zweiten Krümmerende (15) zunächst vergrößert und daraufhin verringert.

14. Vertikale Turbinenpumpe (1) nach einem der drei vorhergehenden Ansprüche, wobei ein Querschnitt des Krümmers (3) im Verlauf zwischen dem ersten Krümmerende (14) und dem zweiten Krümmerende (15) stets gleich groß ist.

15. Vertikale Turbinenpumpe (1) nach einem der vier vorhergehenden Ansprüche, mit einer zwischen dem Motor (12) und dem Krümmer (3) vorgesehenen Antriebslaterne (11) mit einer zwischen Motor (12) und Motorwelle (6) vorgesehenen Kupplung (13), wobei die Antriebslaterne (11) und der Krümmer (3) einschließlich eines vorzugsweise den Krümmer (3) aufweisenden Krümmergehäuses (2) ein- oder mehrteilig, insbesondere zweiteilig ausgeführt sind.

## Claims

1. A bearing arrangement (17) for guiding a motor shaft (6) and/or for supporting axial and/or radial forces of a vertical turbine pump (1), comprising
a bearing (18) comprising an inner ring (19) which can be connected to the motor shaft (6) for conjoint rotation, and an outer ring (20),
an oil sump (21), which is filled with an oil and in which the bearing (18) is arranged so as to be at least partially immersed in the oil, and
an inner oil deflector (22), which is connected to the inner ring (19) for conjoint rotation and deflects oil conveyed between the inner ring (19) and the outer ring (20) as a result of a rotation of the bearing (18) back into the oil sump (21).

2. The bearing arrangement (17) according to the preceding claim, wherein the inner oil deflector (22) extends radially outward from the inner ring (19) and/or, in an axial plan view, extends annularly around the inner ring (19).

3. The bearing arrangement (17) according to any one of the preceding claims, wherein the inner oil deflector (22), in an axial side view, is arranged above the oil sump (21) and extends from the inner ring (19) in the manner of an umbrella and/or axially obliquely downward and radially away in the direction of the oil sump (21).

4. The bearing arrangement (17) according to any one of the preceding claims, comprising an outer wall (25), which radially delimits the oil sump (21) and on the outside of which a plurality of cooling fins (28) are formed.

5. The bearing arrangement (17) according to any one of the preceding claims, comprising an outer oil deflector (27), which is connected to the outer ring (20) for conjoint rotation and is arranged axially above the inner oil deflector (22) with respect to the oil sump (21).

6. The bearing arrangement (17) according to the preceding claim, wherein the outer oil deflector (27) extends, in particular from the outer wall (25) according to the preceding claim 4, radially inward and/or, in an axial plan view, extends annularly around the inner ring (19).

7. The bearing arrangement (17) according to any one of the preceding claims, comprising an outer wall (25), which radially delimits the oil sump (21) and at which the outer ring (20) is provided, wherein a collecting pan (24) for collecting the oil deflected by the inner oil deflector (22) extends, in an axial plan view, around the outer ring (20) and is provided between the outer wall (25) and the outer ring (20).

8. The bearing arrangement (17) according to the preceding claim, wherein a plurality of spaced- apart, axially extending connecting openings (26) for draining the oil collected in the collecting pan (24) into the oil sump (21) are provided between the collecting pan (24) and the oil sump (21).

9. The bearing arrangement (17) according to any one of the preceding claims, wherein the bearing (18) is designed as a radial bearing, an axial bearing, and/or an angular-contact ball bearing.

10. A vertical turbine pump (1), comprising
a riser pipe (5) extending along an axis (4),
a motor shaft (6) arranged in the riser pipe (5),
a motor (12) which is arranged at an upper riser pipe end (9) and drives the motor shaft (6),
an impeller (8) which is arranged at an opposite lower riser pipe end (7) and is driven by the motor shaft (6) for conveying a fluid into the riser pipe (5), and
a bearing arrangement (17) guiding the motor shaft (6) according to any one of the preceding claims.

11. The vertical turbine pump (1) according to the preceding claim, comprising a pressure-side manifold (3), which is connected to the riser pipe (5) at a first manifold end (14) facing the impeller (8) and has a curvature continuously away from the axis (4) and an outlet (16) at an opposite second manifold end (15) for the fluid conveyed, wherein a radial diameter as the height of the manifold (3) initially decreases from the first manifold end (14) toward the second manifold end (15) and subsequently increases.

12. The vertical turbine pump (1) according to the preceding claim, wherein the radial diameter initially continuously decreases and subsequently continuously increases.

13. The vertical turbine pump (1) according to any one of the two preceding claims, wherein an axial diameter as the width of the manifold (3) initially increases from the first manifold end (14) toward the second manifold end (15) and subsequently decreases.

14. The vertical turbine pump (1) according to any one of the three preceding claims, wherein a cross section of the manifold (3) in the course between the first manifold end (14) and the second manifold end (15) is always the same.

15. The vertical turbine pump (1) according to any one of the four preceding claims, comprising a drive lantern (11), which is provided between the motor (12) and the manifold (3) and comprises a coupling (13) provided between the motor (12) and the motor shaft (6), wherein the drive lantern (11) and the manifold (3), including a manifold housing (2) preferably comprising the manifold (3), are designed in one part or multiple parts, in particular in two parts.

## Revendications

1. Agencement de palier (17) destiné à guider un arbre moteur (6) et/ou à soutenir les forces axiales et/ou radiales d'une pompe à turbine verticale (1), comprenant
un palier (18) comprenant un anneau interne (19) qui peut être accouplé à l'arbre moteur (6) pour rotation conjointe, et un anneau externe (20),
un carter d'huile (21), qui est rempli d'une huile et dans lequel le palier (18) est agencé de manière à être au moins partiellement plongé dans l'huile, et
un déflecteur d'huile interne (22), qui est accouplé à l'anneau interne (19) pour rotation conjointe et dévie l'huile convoyée entre l'anneau interne (19) et l'anneau externe (20) du fait d'une rotation du palier (18) en retour dans le carter d'huile (21).

2. Agencement de palier (17) selon la revendication précédente, dans lequel le déflecteur d'huile interne (22) s'étend de manière radiale vers l'extérieur depuis l'anneau interne (19) et/ou, dans une vue dans le plan axial, s'étend de manière annulaire autour de l'anneau interne (19).

3. Agencement de palier (17) selon l'une quelconque des revendications précédentes, dans lequel le déflecteur d'huile interne (22), dans une vue par le côté axial, est agencé au-dessus du carter d'huile (21) et s'étend depuis l'anneau interne (19) à la manière d'un parapluie et/ou de manière axiale en oblique vers le bas et de manière radiale en s'éloignant dans la direction du carter d'huile (21).

4. Agencement de palier (17) selon l'une quelconque des revendications précédentes, comprenant une paroi externe (25), qui délimite de manière radiale le carter d'huile (21) et sur l'extérieur de laquelle une pluralité d'ailettes de refroidissement (28) sont formées.

5. Agencement de palier (17) selon l'une quelconque des revendications précédentes, comprenant un déflecteur d'huile externe (27), qui est accouplé à l'anneau externe (20) pour rotation conjointe et est agencé de manière axiale au-dessus du déflecteur d'huile interne (22) par rapport au carter d'huile (21).

6. Agencement de palier (17) selon la revendication précédente, dans lequel le déflecteur d'huile externe (27) s'étend, en particulier depuis la paroi externe (25) selon la revendication 4 précédente, de manière radiale vers l'intérieur et/ou, dans une vue dans le plan axial, s'étend de manière annulaire autour de l'anneau interne (19).

7. Agencement de palier (17) selon l'une quelconque des revendications précédentes, comprenant une paroi externe (25), qui délimite de manière radiale le carter d'huile (21) et au niveau de laquelle l'anneau externe (20) est pourvu, dans lequel un bac de réception (24) destiné à recueillir l'huile déviée par le déflecteur d'huile interne (22) s'étend, dans une vue dans le plan axial, autour de l'anneau externe (20), et est pourvu entre la paroi externe (25) et l'anneau externe (20).

8. Agencement de palier (17) selon la revendication précédente, dans lequel une pluralité d'ouvertures de raccordement (26) s'étendant de manière axiale et espacées les unes des autres destinées à drainer l'huile recueillie dans le bac de réception (24) dans le carter d'huile (21) sont pourvues entre le bac de réception (24) et le carter d'huile (21).

9. Agencement de palier (17) selon l'une quelconque des revendications précédentes, dans lequel le palier (18) est conçu en tant que palier radial, palier axial et/ou palier à billes à contact angulaire.

10. Pompe à turbine verticale (1), comprenant
un tube goulotte (5) s'étendant le long d'un axe (4),
un arbre moteur (6) agencé dans le tube goulotte (5),
un moteur (12) qui est agencé au niveau d'une extrémité supérieure du tube goulotte (9) et entraîne l'arbre moteur (6),
une roue à aubes (8) qui est agencée au niveau d'une extrémité inférieure opposée du tube goulotte (7) et est entraînée par l'arbre moteur (6) pour convoyer un fluide dans le tube goulotte (5), et
un agencement de palier (17) guidant l'arbre moteur (6) selon l'une quelconque des revendications précédentes.

11. Pompe à turbine verticale (1) selon la revendication précédente, comprenant un collecteur côté pression (3), qui est raccordé au tube goulotte (5) au niveau d'une première extrémité de collecteur (14) faisant face à la roue à aubes (8) et présente une courbure s'éloignant en continu de l'axe (4) et une sortie (16) au niveau d'une seconde extrémité opposée du collecteur (15) pour le fluide convoyé, dans laquelle un diamètre radial en tant que hauteur du collecteur (3) diminue initialement depuis la première extrémité de collecteur (14) vers la seconde extrémité de collecteur (15) et augmente ensuite.

12. Pompe à turbine verticale (1) selon la revendication précédente, dans laquelle le diamètre radial diminue initialement en continu et augmente ensuite en continu.

13. Pompe à turbine verticale (1) selon l'une quelconque des deux revendications précédentes, dans laquelle un diamètre axial en tant que largeur du collecteur (3) augmente initialement depuis la première extrémité de collecteur (14) vers la seconde extrémité de collecteur (15) et diminue ensuite.

14. Pompe à turbine verticale (1) selon l'une quelconque des trois revendications précédentes, dans laquelle une section transversale du collecteur (3) dans le trajet entre la première extrémité de collecteur (14) et la seconde extrémité de collecteur (15) est toujours identique.

15. Pompe à turbine verticale (1) selon l'une quelconque des quatre revendications précédentes, comprenant une lanterne d'entraînement (11), qui est pourvue entre le moteur (12) et le collecteur (3) et comprend un couplage (13) pourvu entre le moteur (12) et l'arbre moteur (6), dans lequel l'arbre d'entraînement (11) et le collecteur (3), incluant un carter de collecteur (2) comprenant préférentiellement le collecteur (3), sont conçus en une pièce ou en plusieurs pièces, en particulier en deux pièces.
